# EUROPEAN PATENT APPLICATION

(11) **EP 2 355 532 A1**
(43) Date of publication of application: **10.08.2011**
(21) Application number: 10821920.5
(22) Date of filing: 01.10.2010
(51) Int. Cl.: H04N 13/02, G03B 35/02

(54) **IMAGE PROCESSING DEVICE AND METHOD, AND PROGRAM**

(30) Priority: 09.10.2009 JP 2009235403
(71) Applicant: Sony Corporation, Tokyo 108-0075 (JP)
(72) Inventor: YAMASHITA, Noriyuki, Tokyo 142-0054 (JP); HIRAI, Jun, Tokyo 151-0065 (JP)
(74) Representative: Haines, Miles John L.S.
(86) International application number: PCT/JP2010/067199
(87) International publication number: WO 2011/043249

(57) **Abstract**

The present invention relates to an image processing apparatus and method, and a program capable of presenting a stereoscopic image having different parallaxes.

An image capture apparatus 11 captures photographic images P(1) to P(N) in a state of being turned around a center of turn C11. The image capture apparatus 11 crops, as strip images, certain regions in the photographic images, and arranges side by side and combines the strip images to generate panoramic images in which a region in an image capture area is set as a subject. The image capture apparatus 11 obtaining panoramic moving images formed of a plurality of panoramic images by generating a plurality of panoramic images while shifting the cropping positions of the strip images.

The image capture apparatus 11 selects two panoramic moving images from among a plurality of panoramic moving images having parallaxes in accordance with a specified parallax, and obtains a stereoscopic panoramic moving image formed of the two panoramic moving images, The two panoramic moving images constituting the stereoscopic panoramic moving image are reproduced simultaneously, thus enabling stereoscopic display of the subject. The present invention can be applied to a camera.

## Description

### Technical Field

The present invention relates to an image processing apparatus and method, and a program, and more specifically to an image processing apparatus and method, and a program designed such that a stereoscopic image having different parallaxes can be presented.

### Background Art

In recent years, with the prevalence of digital still cameras, the number of users who capture a large number of photographs has increased. Additionally, there is also a demand for an effective presentation method of a large number of captured photographs.

For example, so-called panoramic images are known as a way of effectively presenting captured photographs. A panoramic image is a single still image obtained by arranging a plurality of still images side by side, which are obtained by capturing images while panning an image capture apparatus in a certain direction, so that the same subject appears in the still images in an overlapping manner (see, for example, PTL 1).

Such a panoramic image allows a wider area than that with a single still image captured by a standard image capture apparatus (the angle of view) to be displayed as a subject, thus enabling more effective display of photographic images of a subject.

Furthermore, in a case where a plurality of still images are captured while an image capture apparatus is panned in order to obtain a panoramic image, several still images may include the same subject. In such a case, the same subject in the different still images was captured at different positions. Thus, parallax occurs. Using this, two images having parallax (hereinafter referred to as a stereoscopic image) are generated from a plurality of still images. Therefore, the images are displayed simultaneously using the lenticular method or the like, so that the subject to be captured can be displayed stereoscopically.

### Citation List

### Patent Literature

PTL 1: Japanese Patent No. 3168443

### Summary of Invention

### Technical Problem

Meanwhile, in a case where a stereoscopic image is to be displayed, a demand may exist to change the magnitude of the parallax (distance between points of view) between two images constituting the stereoscopic image to a desired magnitude. However, the technique described above does not take into account the parallax of the stereoscopic image to be generated, and therefore cannot meet such a demand.

The present invention has been made in view of such a situation, and intends to enable the presentation of a stereoscopic image having different parallaxes in accordance with a user's demand.

### Solution to Problem

An image processing apparatus in an aspect of the present invention includes position information generating means for generating position information on the basis of a plurality of photographic images obtained by capturing images using image capturing means while moving the image capturing means, the position information indicating a relative positional relationship between the plurality of photographic images when the photographic images are arranged side by side in a certain plane so that a same subject included in the photographic images that are different appears in an overlapping manner; strip image generating means for generating a first strip image to a third strip image from each of the plurality of photographic images in a case where the plurality of photographic images are arranged side by side in the plane on the basis of the position information, by cropping, from a first reference position to a third reference position in a photographic image among the photographic images, a first region to a third region in the photographic image which correspond to the first reference position to the third reference position in another photographic image arranged side by side so as to overlap the photographic image; panoramic image generating means for generating a first panoramic image to a third panoramic image having parallaxes in which a same region in an image capture area to be captured when the plurality of photographic images are captured is displayed, by arranging side by side and combining the first strip image to the third strip image obtained from the plurality of photographic images; and selecting means for selecting two panoramic images from among the first panoramic image to the third panoramic image, wherein the first reference position is located between the second reference position and the third reference position in the photographic image, and a distance from the first reference position to the second reference position is different from a distance from the first reference position to the third reference position.

The image processing apparatus can further include display control means for causing the same region in the image capture area to be displayed stereoscopically by causing the two panoramic images selected by the selecting means from among the first panoramic image to the third panoramic image to be displayed simultaneously.

The strip image generating means can be caused to generate a plurality of the first strip images to a plurality of the third strip image for the plurality of photographic images, from the photographic images while shifting the first regions to the third regions in the photographic images in a certain direction, and the panoramic image generating means can be caused to generate the first panoramic image to the third panoramic image for positions of each of the first regions to each of the third regions to generate an image group having a plurality of the first panoramic images to a plurality of the third panoramic images in which the same region in the image capture area is displayed.

The position information generating means can be caused to generate the position information using a plurality of predetermined block regions in a photographic image among the photographic images, by searching for each of block corresponding regions corresponding to the plurality of block regions from a photographic image captured at a time earlier than the photographic image.

The position information generating means can be caused to generate the position information on the basis of a relative positional relationship between the plurality of block regions and a relative positional relationship between a plurality of the block corresponding regions, by detecting a block region including a moving subject and by, in a case where a block region including the moving subject is detected, searching for the corresponding block corresponding region from among the plurality of block regions using a block region different from the detected block region.

An image processing method or program in an aspect of the present invention includes the steps of generating position information on the basis of a plurality of photographic images obtained by capturing images using image capturing means while moving the image capturing means, the position information indicating a relative positional relationship between the plurality of photographic images when the photographic images are arranged side by side in a certain plane so that a same subject included in the photographic images that are different appears in an overlapping manner; generating a first strip image to a third strip image from each of the plurality of photographic images in a case where the plurality of photographic images are arranged side by side in the plane on the basis of the position information, by cropping, from a first reference position to a third reference position in a photographic image among the photographic images, a first region to a third region in the photographic image which correspond to the first reference position to the third reference position in another photographic image arranged side by side so as to overlap the photographic image; generating a first panoramic image to a third panoramic image having parallaxes in which a same region in an image capture area to be captured when the plurality of photographic images are captured is displayed, by arranging side by side and combining the first strip image to the third strip image obtained from the plurality of photographic images; and selecting two panoramic images from among the first panoramic image to the third panoramic image, wherein the first reference position is located between the second reference position and the third reference position in the photographic image, and a distance from the first reference position to the second reference position is different from a distance from the first reference position to the third reference position.

In an aspect of the present invention, position information is generated on the basis of a plurality of photographic images obtained by capturing images using image capturing means while moving the image capturing means, the position information indicating a relative positional relationship between the plurality of photographic images when the photographic images are arranged side by side in a certain plane so that a same subject included in the photographic images that are different appears in an overlapping manner; a first strip image to a third strip image are generated from each of the plurality of photographic images in a case where the plurality of photographic images are arranged side by side in the plane on the basis of the position information, by cropping, from a first reference position to a third reference position in a photographic image among the photographic images, a first region to a third region in the photographic image which correspond to the first reference position to the third reference position in another photographic image arranged side by side so as to overlap the photographic image; a first panoramic image to a third panoramic image having parallaxes in which a same region in an image capture area to be captured when the plurality of photographic images are captured is displayed are generated by arranging side by side and combining the first strip image to the third strip image obtained from the plurality of photographic images; two panoramic images are selected from among the first panoramic image to the third panoramic image; and the first reference position is located between the second reference position and the third reference position in the photographic image, and a distance from the first reference position to the second reference position is different from a distance from the first reference position to the third reference position.

### Advantageous Effects of Invention

According to an aspect of the present invention, a stereoscopic image having different parallaxes can be presented in accordance with a user's demand.

### Brief Description of Drawings

[Fig. 1] Fig. 1 is a diagram describing the way photographic images are captured.
[Fig. 2] Fig. 2 is a diagram describing parallax during the capture of images.
[Fig. 3] Fig. 3 is a diagram illustrating an example configuration of an embodiment of an image capture apparatus to which the present invention is applied.
[Fig. 4] Fig. 4 is a diagram illustrating an example configuration of a signal processing unit.
[Fig. 5] Fig. 5 is a flowchart describing a stereoscopic panoramic moving image reproduction process.
[Fig. 6] Fig. 6 is a diagram describing position alignment of photographic images.
[Fig. 7] Fig. 7 is a diagram describing the calculation of center coordinates.
[Fig. 8] Fig. 8 is a diagram describing the cropping of strip images.
[Fig. 9] Fig. 9 is a diagram describing the generation of panoramic moving images.
[Fig. 10] Fig. 10 is a diagram illustrating an example configuration of a computer.

### Description of Embodiments

An embodiment to which the present invention is applied will be described hereinafter with reference to the drawings.

### [Description of Stereoscopic Panoramic Moving Image]

An image capture apparatus to which the present invention is applied is formed of, for example, a camera or the like, and generates a stereoscopic panoramic moving image from a plurality of photographic images continuously captured by the image capture apparatus in a state where the image capture apparatus is moving. The stereoscopic panoramic moving image is composed of two panoramic moving images having parallax.

A panoramic moving image is an image group having a plurality of panoramic images in which a region in a wider range than the image capture range (angle of view) in the real space within which an image capture apparatus can capture an image in single image capture is displayed as a subject. Therefore, a panoramic moving image can be regarded as being a single moving image if each of the panoramic images constituting the panoramic moving image is considered an image of one frame, or can also be regarded as being a still image group if each of the panoramic images constituting the panoramic moving image is considered a single still image. Hereinafter, for ease of description, the description will continue assuming that a panoramic moving image is a moving image.

In a case where a user wishes to cause an image capture apparatus to generate a stereoscopic panoramic moving image, the user operates the image capture apparatus to capture photographic images used for the generation of the stereoscopic panoramic moving image.

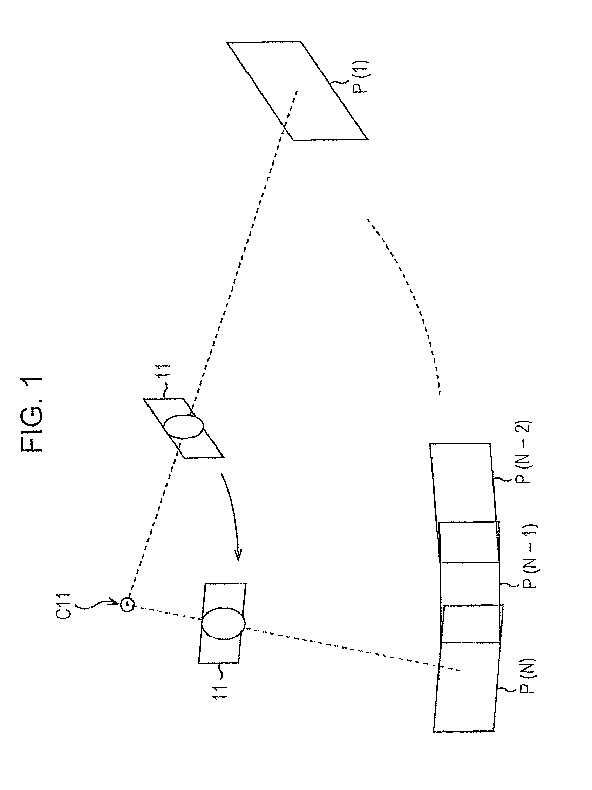

For example, as illustrated in Fig. 1, during the capture of photographic images, the user causes an image capture apparatus 11 to continuously capture images of a subject while turning (panning) the image capture apparatus 11 from right to left in the figure around a center of turn C11 with an optical lens of the image capture apparatus 11 directed toward the front in the figure. At this time, the user adjusts the turning speed of the image capture apparatus 11 so that the same stationary subject is included in a plurality of photographic images to be continuously captured.

Capturing photographic images while moving the image capture apparatus 11 in the above manner results in the obtainment of N photographic images P(1) to P(N).

Here, the photographic image P(1) is the photographic image having the oldest capture time among the N photographic images, that is, the first captured image, and the photographic image P(N) is the photographic image having the latest capture time, or the last captured image, among the N photographic images. Hereinafter, the n-th (where 1 ≤ n ≤ N) captured photographic image is also referred to as the photographic image P(n).

Note that each of the photographic images may be a continuously shot still image or an image of one frame in a photographed moving image.

Additionally, in a case where capturing an image with the image capture apparatus 11 itself rotated by 90 degrees in Fig. 1, that is, with the image capture apparatus 11 being in a landscape orientation enables the obtainment of a photographic image that is longer in the vertical direction in the figure, photographic images may be captured with the image capture apparatus 11 being a landscape orientation.
In such a case, a stereoscopic panoramic moving image is generated in which photographic images are rotated by 90 degrees in the same direction as the image capture apparatus 11.

When N photographic images are obtained in the above manner, the image capture apparatus 11 generates a plurality of panoramic moving images using these photographic images. Here, a panoramic moving image is a moving image in which an entire region in the image capture area to be captured when the N photographic images are captured is displayed as a subject. In the image capture apparatus 11, a plurality of panoramic moving images having different parallaxes are generated.

Panoramic moving images having parallaxes are obtained from photographic images because a plurality of photographic images are captured in a state where the image capture apparatus 11 is moving and thus the subjects in these photographic images have parallax.

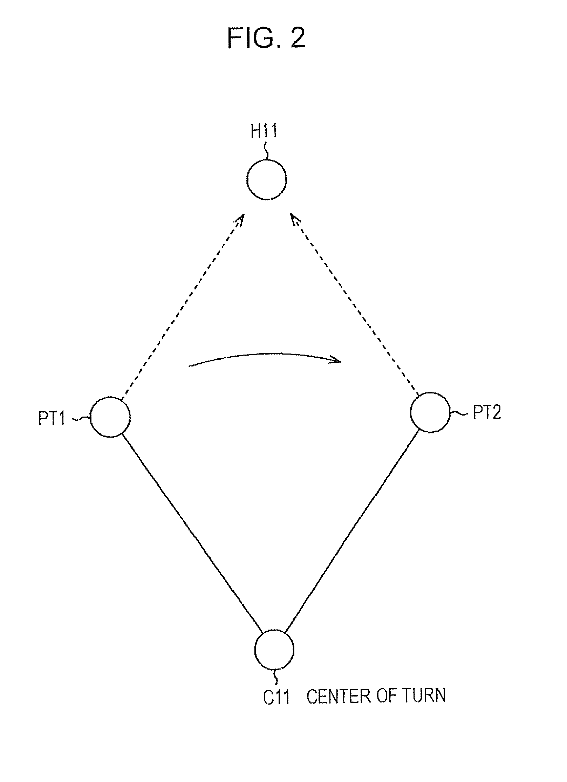

For example, as illustrated in Fig. 2, it is assumed that when photographic images were captured while turning the image capture apparatus 11 in the arrow direction in the figure around the center of turn C11, photographic images were captured at a position PT1 and a position PT2.

In this case, photographic images captured when the image capture apparatus 11 is at the position PT1 and the position PT2 include the same subject H11. However, the positions at which these photographic images were captured, that is, the observation positions of the subject H11, are different, thus causing parallax. In a case where the image capture apparatus 11 is turned at a constant turning speed, the longer the distance from the center of turn C11 to the image capture apparatus 11 is, for example, the longer the distance from the center of turn C11 to the position PT1 is, the larger the parallax becomes.

A plurality of panoramic moving images having different observation positions (having parallaxes) are generated using the parallax caused in the above manner, and two of these panoramic moving images are simultaneously reproduced using the lenticular method or the like. Thus, a panoramic moving image can be stereoscopically presented to the user.

Note that a panoramic moving image displayed so as to be observed by the right eye of the user among two panoramic moving images constituting a stereoscopic panoramic moving image is hereinafter referred to as a right-eye panoramic moving image. Further, a panoramic moving image displayed so as to be observed by the left eye of the user among the two panoramic moving images constituting the stereoscopic panoramic moving image is referred to as a left-eye panoramic moving image.

### [Configuration of Image Capture Apparatus]

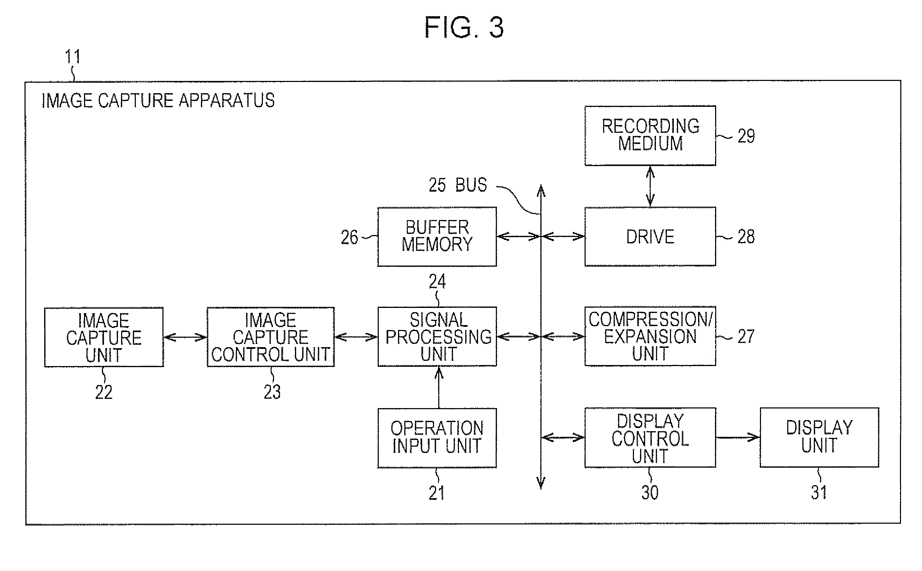

Fig. 3 is a diagram illustrating an example configuration of an embodiment of the image capture apparatus 11 to which the present invention is applied.

The image capture apparatus 11 is composed of an operation input unit 21, an image capture unit 22, an image capture control unit 23, a signal processing unit 24, a bus 25, a buffer memory 26, a compression/expansion unit 27, a drive 28, a recording medium 29, a display control unit 30, and a display unit 31.

The operation input unit 21 is formed of buttons and the like. In response to an operation of a user, the operation input unit 21 supplies a signal corresponding to the operation to the signal processing unit 24. The image capture unit 22 is formed of an optical lens, an image capture element, and the like. The image capture unit 22 performs photoelectric conversion of light from a subject to capture a photographic image, and supplies the photographic image to the image capture control unit 23. The image capture control unit 23 controls the image capture operation performed by the image capture unit 22, and, in addition, supplies the photographic image obtained from the image capture unit 22 to the signal processing unit 24.

The signal processing unit 24 is connected to the buffer memory 26 to the drive 28 and the display control unit 30 via the bus 25, and controls the entirety of the image capture apparatus 11 in accordance with a signal from the operation input unit 21.

For example, the signal processing unit 24 supplies the photographic image obtained from the image capture control unit 23 to the buffer memory 26 via the bus 25, or generates a panoramic moving image from photographic images acquired from the buffer memory 26.

The buffer memory 26 is formed of an SDRAM (Synchronous Dynamic Random Access Memory) or the like, and temporarily records data of photographic images and the like supplied via the bus 25. The compression/expansion unit 27 encodes or decodes the panoramic moving image supplied via the bus 25 using a certain method.

The drive 28 causes the panoramic moving image supplied via the bus 25 to be recorded on a recording medium 29, or reads a panoramic moving image recorded on the recording medium 29 and outputs the panoramic moving image to the bus 25. The recording medium 29 is formed of a non-volatile memory or the like that is removably attached to the image capture apparatus 11, and has recorded thereon panoramic moving images in accordance with the control of the drive 28.

The display control unit 30 supplies a stereoscopic panoramic moving image supplied via the bus 25 to the display unit 31 to display the stereoscopic panoramic moving image. The display unit 31 is formed of, for example, an LCD (Liquid Crystal Display) or a lenticular lens, and stereoscopically displays an image using the lenticular method in accordance with the control of the display control unit 30.

### [Configuration of Signal Processing Unit]

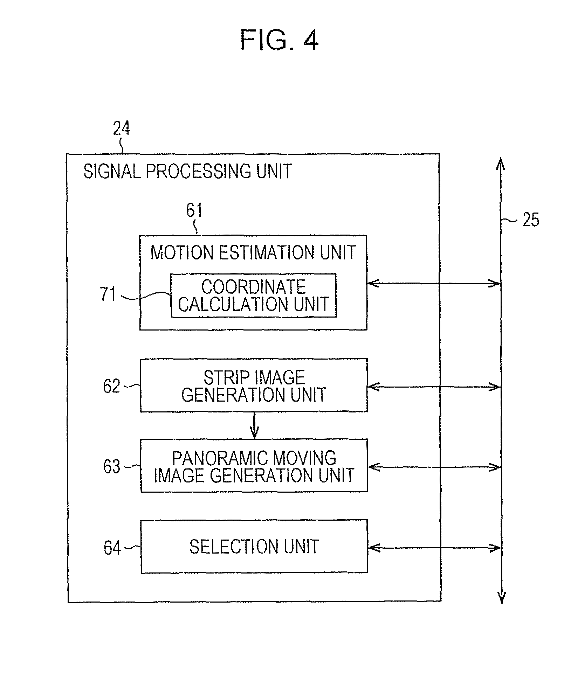

Furthermore, more specifically, the signal processing unit 24 in Fig. 3 is configured as illustrated in Fig. 4.

That is to say, the signal processing unit 24 is composed of a motion estimation unit 61, a strip image generation unit 62, a panoramic moving image generation unit 63, and a selection unit 64.

The motion estimation unit 61 performs motion estimation using two photographic images having different capture times, which are supplied via the bus 25. The motion estimation unit 61 includes a coordinate calculation unit 71.

The coordinate calculation unit 71 generates, based on the motion estimation result, information indicating the relative positional relationship between the two photographic images when these photographic images are placed so as to be arranged side by side in a certain plane so that the same subject appears in the photographic images in an overlapping manner. Specifically, the coordinates of the position of the center (hereinafter referred to as center coordinates) of a photographic image when the two-dimensional xy coordinate system is plotted on a certain plane are calculated as information indicating the relative positional relationship between the photographic images.

The strip image generation unit 62 produces strip images by cropping certain regions in the photographic images supplied via the bus 25 using the photographic images and their center coordinates, and supplies the strip images to the panoramic moving image generation unit 63.

The panoramic moving image generation unit 63 combines the strip images obtained from the strip image generation unit 62 to generate a plurality of panoramic images, thereby generating a panoramic moving image that is a panoramic image group. In the panoramic moving image generation unit 63, a plurality of panoramic moving images having parallaxes are generated. Note that a panoramic moving image of one frame, that is, one panoramic image, is an image in which an entire range (region) in the image capture area to be captured when the photographic images are captured is displayed as a subject.

The selection unit 64 selects, in accordance with the parallax (distance between points of view) specified by the user, two of a plurality of panoramic moving images having parallaxes as right-eye and left-eye panoramic moving images constituting a stereoscopic panoramic moving image, and outputs the two panoramic moving images to the display control unit 30.

### [Description of Stereoscopic Panoramic Moving Image Reproduction Process]

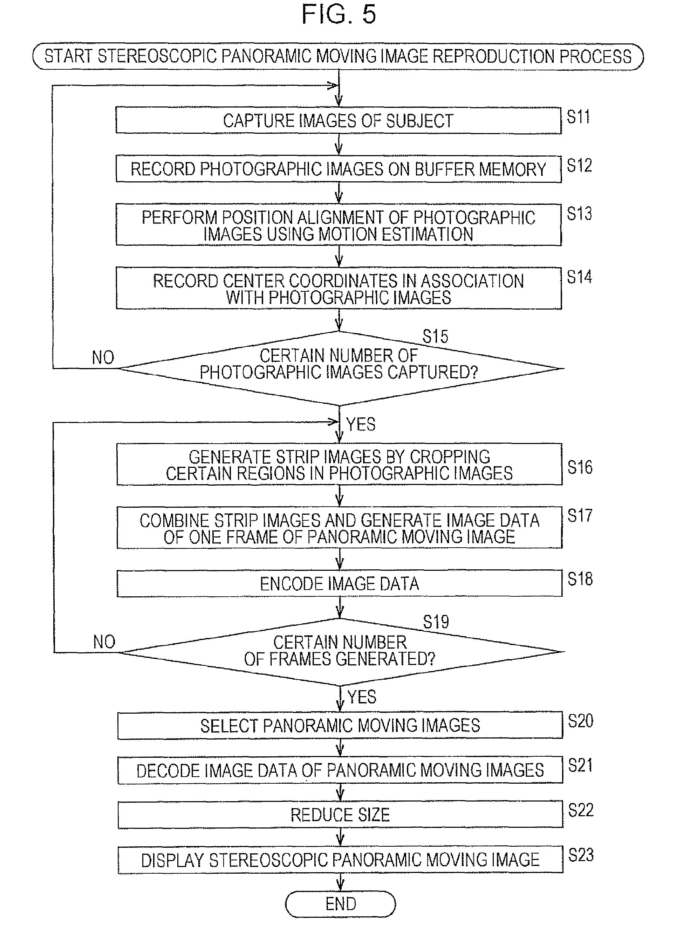

Next, a stereoscopic panoramic moving image reproduction process in which the image capture apparatus 11 captures photographic images to generate a stereoscopic panoramic moving image and reproduces the stereoscopic panoramic moving image will be described with reference to a flowchart of Fig. 5. The stereoscopic panoramic moving image reproduction process is started when a user operates the operation input unit 21 and issues an instruction for generating a stereoscopic panoramic moving image.

In step S11, the image capture unit 22 captures an image of a subject in a state where, as illustrated in Fig. 1, the image capture apparatus 11 is moving. Thereby, a single (hereinafter referred to as one frame) photographic image is obtained. The photographic image captured by the image capture unit 22 is supplied from the image capture unit 22 to the signal processing unit 24 via the image capture control unit 23.

In step S12, the signal processing unit 24 supplies the photographic image supplied from the image capture unit 22 to the buffer memory 26 via the bus 25 for temporary recording. At this time, the signal processing unit 24 records the photographic image which is assigned a frame number in order to specify when a photographic image to be recorded was captured. Note that the n-th captured photographic image P(n) is hereinafter also referred to as the photographic image P(n) of frame n.

In step S13, the motion estimation unit 61 acquires the photographic images of the current frame n and the preceding frame (n-1) from the buffer memory 26 via the bus 25, and perform position alignment of the photographic images by motion estimation.

For example, in a case where the photographic image recorded on the buffer memory 26 in immediately preceding step S12 is the n-th captured photographic image P(n), the motion estimation unit 61 acquires the photographic image P(n) of the current frame n and the photographic image P(n-1) of the preceding frame (n-1).

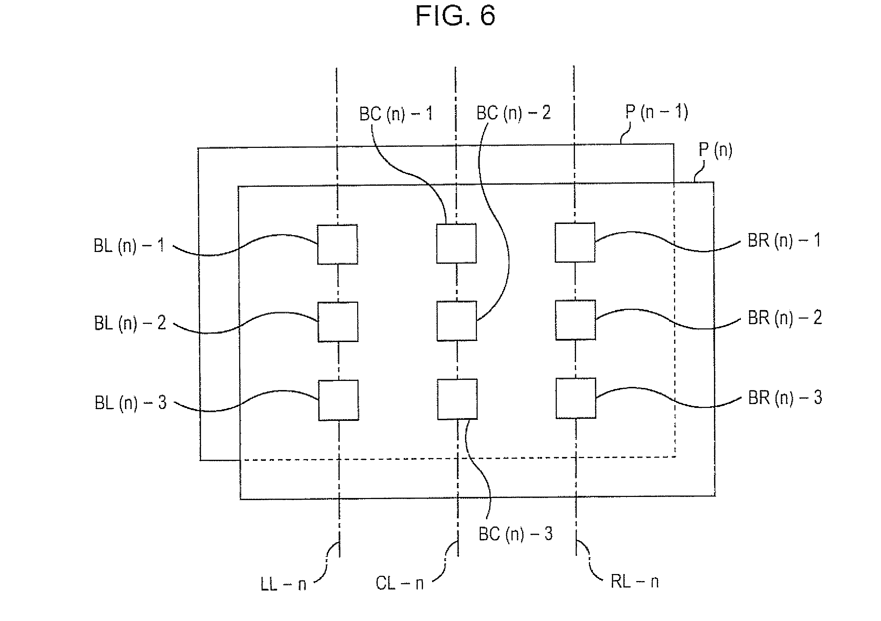

Then, as illustrated in Fig. 6, the motion estimation unit 61 performs position alignment by searching for which positions in the photographic image P(n-1) of the preceding frame the same images as those of nine blocks BL(n)-1 to BR(n)-3 in the photographic image P(n) are located at.

Here, the blocks BC(n)-1 to BC(n)-3 are rectangular regions arranged side by side vertically in the figure along a boundary CL-n that is an imaginary vertical straight line in the figure located substantially at the center of the photographic image P(n).

Additionally, the blocks BL(n)-1 to BL(n)-3 are rectangular regions arranged side by side vertically in the figure along a boundary LL-n that is an imaginary vertical straight line located on the left side of the boundary CL-n in the photographic image P(n) in the figure. Similarly, the blocks BR.(n)-1 to BR(n)-3 are rectangular regions arranged side by side vertically in the figure along a boundary RL-n that is an imaginary vertical straight line located on the right side of the boundary CL-n in the photographic image P(n) in the figure. The positions of the nine blocks BL(n)-1 to BR(n)-3 are determined in advance.

The motion estimation unit 61 searches for, for each of the nine blocks in the photographic image P(n), a region that is in the photographic image P(n-1) having the same shape and size as the block and that has the smallest difference from the block (the region is hereinafter referred to as a block corresponding region). Here, it is assumed the difference from a block is the sum of absolute difference values between pixel values of pixels at the same positions in the block to be processed, for example, the block BL(n)-1, and a region regarded as a candidate block corresponding region.

The above motion estimation results in the obtainment of, for each of the blocks BL(n)-1 to BR(n)-3 in the photographic image P(n), a block corresponding region positioned in the photographic image P(n-1) with the same positional relationship as the relative positional relationship between these blocks.

A block corresponding region in the photographic image P(n-1), which corresponds to the block to be processed in the photographic image P(n), is a region having the smallest difference from the block to be processed in the photographic image P(n-1). For this reason, it is estimated that the same image as that of the block to be processed is displayed in the block corresponding region.

Therefore, arranging the photographic image P(n) and the photographic image P(n-1) side by side so as to overlap in a certain plane in such a manner that the blocks BL(n)-1 to BR(n)-3 overlap the corresponding block corresponding regions would result in the same subject in the photographic images appearing in an overlapping manner.

However, actually, in some cases, a block and a block corresponding region may not necessarily have completely the same positional relationship. For this reason, more specifically, the motion estimation unit 61 arranges the photographic image P(n) and the photographic image P(n-1) side by side in a plane so that all the blocks substantially overlap block corresponding regions, and uses the result as the result of the position alignment of the photographic images.

Note that in a case where a moving subject appears in a photographic image and the subject is included in a block in the photographic image P(n), the obtained nine block corresponding regions do not have the same positional relationship as the blocks BL(n)-1 to BR(n)-3.

Thus, in a case where the obtained relative positional relationship between the block corresponding regions is different from the relative positional relationship between the blocks in the photographic image P(n), the motion estimation unit 61 excludes a block that is estimated to include a moving subject, and again performs position alignment based on motion estimation. That is, a block corresponding region having a different relative positional relationship from the other block corresponding regions is detected, the block in the photographic image P(n), which corresponds to the detected block corresponding region, is excluded from the target to be processed, and motion estimation is performed again using only the remaining blocks.

Specifically, it is assumed that the blocks BL(n)-1 to BR(n)-3 are arranged side by side vertically and horizontally in Fig. 6 at an equal interval with the interval being a distance QL. For example, the distance between the block BL(n)-2 and the block BL(n)-2, which are adjacent, and the distance between the block BL(n)-1 and the block BC(n)-1, which are adjacent, are QL. In this case, the motion estimation unit 61 detects a block including motion in the photographic image P(n) on the basis of the relative positional relationship between the block corresponding regions corresponding to the respective blocks.

That is to say, the motion estimation unit 61 determines a distance QM between adjacent block corresponding regions, such as that between the block corresponding region corresponding to the block BR(n)-3 and the block corresponding region corresponding to the block BC(n)-3.

Consequently, for the block BR(n)-2 and the block BC(n)-3, it is assumed that the absolute value of the difference between the distance QM, which is between the block corresponding regions corresponding to these blocks and the block corresponding region corresponding to the block BR(n)-3, and the distance QL is greater than equal to a predetermined threshold value.

Additionally, it is assumed that the absolute value of the difference between the distance QM, which is between the block corresponding regions corresponding to the blocks BR(n)-2 and BC(n)-3 and other adjacent block corresponding regions (excluding the block corresponding region of the block BR(n)-3), and the distance QL is less than the predetermined threshold value.

In this case, the block corresponding regions of other blocks different from the block BR(n)-3 are arranged side by side with the same positional relationship as the relative positional relationship between the respective blocks. However, the positional relationship between only the block corresponding region of the block BR(n)-3 and other block corresponding regions is different from the positional relationship between each block and the other block corresponding regions. In a case where such a detection result is obtained, the motion estimation unit 61 determines that the block BR(n)-3 includes a moving subject.

Note that the detection of a block including motion may be performed not only using the distance between adjacent block corresponding regions but also using the rotation angle of the block corresponding region of interest with respect to another adjacent block corresponding region and the like. That is, for example, if there is a block corresponding region inclined by a certain angle or more with respect to other block corresponding regions, it is determined that the block corresponding to the block corresponding region includes a moving subject.

when a block including motion is detected in this way, the motion estimation unit 61 performs motion estimation using remaining blocks except for the block including motion to again perform position alignment between the photographic image P(n) and the photographic image P(n-1).

In this manner, position alignment using only a block including a non-moving subject, that is, only including the so-called background, except for a block including a moving subject, enables more accurate position alignment. The photographic image P(n) and the photographic image P(n-1) are arranged side by side in accordance with the result of the position alignment, thus allowing these photographic images to be arranged side by side so that a non-moving subject appears in an overlapping manner.

When position alignment is performed, then, the coordinate calculation unit 71 calculates the center coordinates of the photographic image P(n) when the previously captured photographic images P(1) to P(n) are arranged side by side in a certain plane, that is, the xy coordinate system, in accordance with the result of the position alignment of each frame.

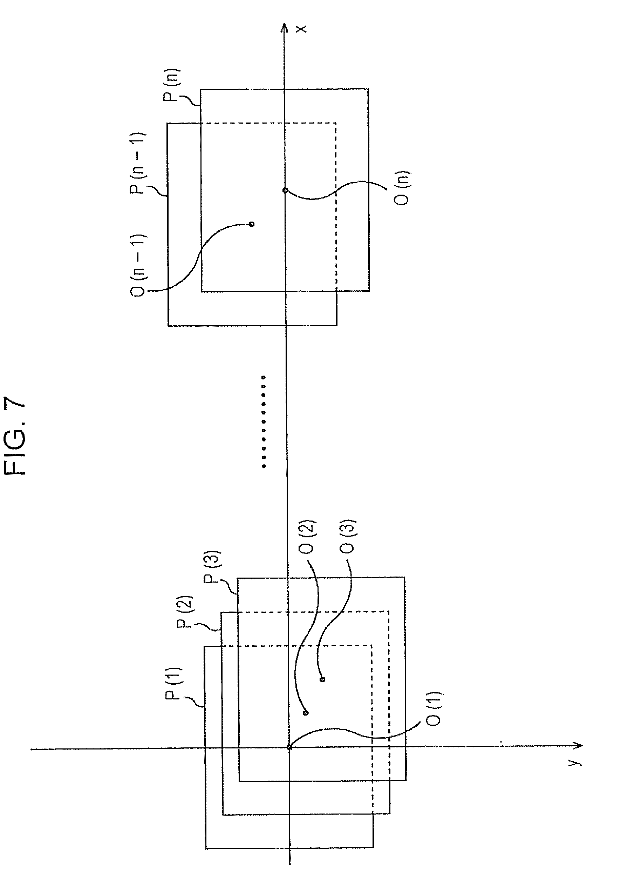

For example, as illustrated in Fig. 7, individual photographic images are arranged side by side so that the center of the photographic image P(1) is located at the position of the origin of the xy coordinate system and so that the same subject included in the photographic images appears in an overlapping manner. Note that in the figure, the horizontal direction represents the x direction and the vertical direction represents the y direction. Additionally, respective points O(1) to O(n) in the photographic images P(1) to P(n) represent the positions of the centers of the corresponding photographic images.

For example, if it is assumed that the photographic image of the current frame to be processed is the photographic image P(n), the center coordinates of the points O(1) to O(n-1) at the center of the photographic images P(1) to P(n-1) have already been determined and recorded on the buffer memory 26.

The coordinate calculation unit 71 reads the center coordinates of the photographic image P(n-1) from the buffer memory 26, and determines the center coordinates of the photographic image P(n) from the read center coordinates and the result of the position alignment between the photographic image P(n) and the photographic image P(n-1). That is, the x coordinate and y coordinate of the point O(n) are determined as the center coordinates.

Referring back to the description of the flowchart of Fig. 5, in step S13, position alignment is performed, and the center coordinates of the photographic image P(n) are determined. Then, the process proceeds to step S14.

In step S14, the motion estimation unit 61 supplies the obtained center coordinates of the photographic image P(n) to the buffer memory 26, and records the center coordinates in association with the photographic image P(n).

In step S15, the signal processing unit 24 determines whether or not a predetermined certain number of photographic images have been captured. For example, as illustrated in Fig. 1, in a case where a region in a certain area is captured individually N times, it is determined that the certain number of photographic images has been captured when N photographic images are captured.

Note that in a case where the image capture apparatus 11 is provided with a device capable of detecting an angle at which the image capture apparatus 11 is turned, such as a gyro sensor, instead of determining the number of photographic images captured, it may be determined whether or not the image capture apparatus 11 has been turned by a certain angle since the start of the capture of photographic images, Even in this case, it can be specified whether or not the capture of photographic images in which the entirety of a specific region in a certain area is set as a subject has been performed.

In a case where it is determined in step S15 that the certain number of photographic images has not yet been captured, the process returns to step S11, and the photographic image of the next frame is captured.

On the other hand, in a case where it is determined in step S15 that the certain number of photographic images has been captured, the process proceeds to step S16.

In step S16, the strip image generation unit 62 acquires N photographic images and their center coordinates from the buffer memory 26 and generates strip images by cropping certain regions from the respective photographic images on the basis of the acquired photographic images and center coordinates.

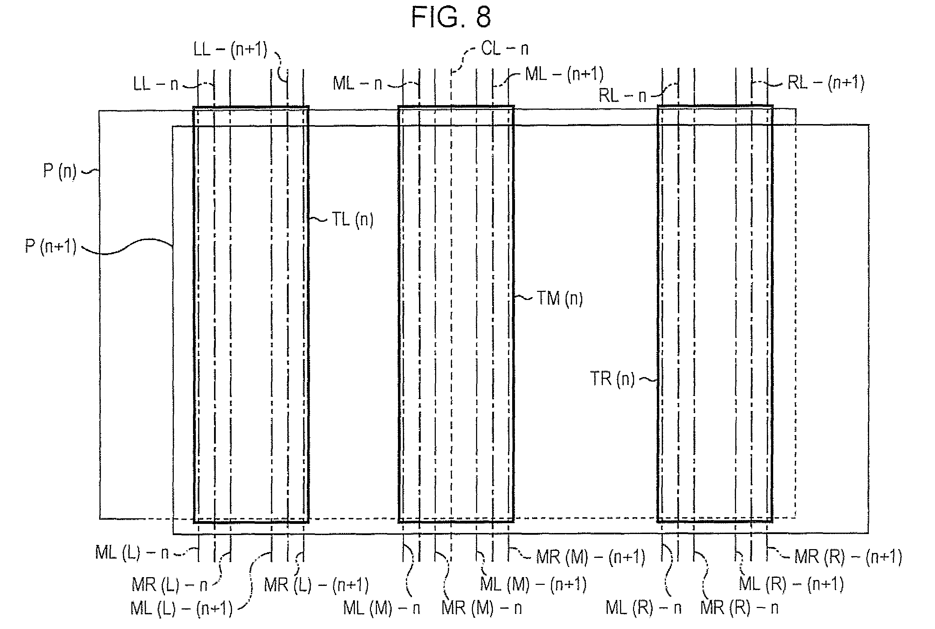

For example, as illustrated in Fig. 8, the strip image generation unit 62 produces strip images by cropping a region TM(n), a region TL(n), and a region TR(n) that are defined with reference to a boundary ML-n, a boundary LL-n, and a boundary RL-n in the photographic image P(n). Note that in Fig. 8, portions corresponding to those in the case of Fig. 6 are assigned the same numerals and the descriptions thereof are omitted.

In Fig. 8, a photographic image P(n) and a photographic image P(n+1) that have been continuously captured are arranged side by side so that the same subject appears in an overlapping manner on the basis of their center coordinates. The horizontal direction in Fig. 8 corresponds to, for example, the x direction in Fig. 7.

The boundary ML-n in the photographic image P(n) is an imaginary vertical straight line positioned on the left side of the boundary CL-n in the figure, and the boundary ML-(n+1) in the photographic image P(n+1) is a boundary corresponding to the boundary ML-n of the photographic image P(n). That is, the boundary ML-n and the boundary ML-(n+1) are imaginary straight lines in the vertical direction in the figure that are located at the same positions in the photographic image P(n) and the photographic image P(n+1).

The boundary LL-(n+1) in the photographic image P(n+1) is a boundary corresponding to the boundary LL-n in the photographic image P(n), and the boundary RL-(n+1) in the photographic image P(n+1) is a boundary corresponding to the boundary RL-n in the photographic image P(n).

Additionally, a boundary ML(M)-n and a boundary MR(M)-n that are straight lines in the vertical direction in the figure are straight lines located in the vicinity of the boundary ML-n in the photographic image P(n), and are positioned apart by a predetermined distance to the left and right of the boundary ML-n, respectively. Similarly, a boundary ML(M)-(n+1) and a boundary MR(M)-(n+1) that are straight lines in the vertical direction in the figure are straight lines located in the vicinity of the boundary ML-(n+1) in the photographic image P(n+1), and are positioned apart by a predetermined distance to the left and right of the boundary ML-(n+1), respectively.

A boundary ML(L)-n and a boundary MR(L)-n that are straight lines in the vertical direction in the figure are straight lines located in the vicinity of the boundary LL-n in the photographic image P(n), and are positioned apart by a predetermined distance to the left and right of the boundary LL-n, respectively.

Additionally, a boundary MT(L)-(n+1) and a boundary MR(L)-(n+1) that are straight lines in the vertical direction in the figure are straight lines located in the vicinity of the boundary LL-(n+1) in the photographic image P(n+1), and are positioned apart by a predetermined distance to the left and right of the boundary LL-(n+1), respectively.

Further, a boundary ML(R)-n and a boundary MR(R)-n that are straight lines in the vertical direction in the figure are straight lines located in the vicinity of the boundary RL-n in the photographic image P(n), and are positioned apart by a predetermined distance to the left and right of the boundary RL-n, respectively. Similarly, a boundary ML(R)-(n+1) and a boundary MR(R)-(n+1) that are straight lines in the vertical direction in the figure are straight lines located in the vicinity of the boundary RL-(n+1) in the photographic image P(n+1), and are positioned apart by a predetermined distance to the left and right of the boundary RL-(n+1), respectively.

The strip image generation unit 62 produces strip images by cropping three regions TM(n), TL(n), and TR(n) from the photographic image P(n).

For example, the region TM(n) extending from the boundary ML(M)-n to the position of the boundary MR(M)-(n+1) in the photographic image P(n) is cropped as a single strip image (hereinafter also referred to as the strip image TM(n)). Here, the position of the boundary MR(M)-(n+1) in the photographic image P(n) is the position in the photographic image P(n), which overlaps the boundary MR(M)-(n+1) when the photographic image P(n) and the photographic image P(n+1) are arranged side by side.

Similarly, a region TM(n-1) extending from a boundary ML(M)-(n-1) to the position of the boundary MR(M)-n in the photographic image P(n-1) is cropped as a single strip image substantially from the center of the photographic image P(n-1).

Therefore, a subject in the region extending from the boundary ML(M)-n to the position of the boundary MR(M)-n in the strip image TM(n) is basically the same as a subject in the region extending from the boundary ML(M)-n to the position of the boundary MR(M)-n in the strip image TM(n-1). It is noted that since the strip image TM(n) and the strip image TM(n-1) are images cropped from the photographic image P(n) and the photographic image P(n-1), respectively, the times at which images of even the same subject were captured are different.

Similarly, a subject in the region extending from the boundary ML(M)-(n+1) to the position of the boundary MR(M)-(n+1) in the strip image TM(n) is basically the same as a subject in the region extending from the boundary ML(M)-(n+1) to the position of the boundary MR(M)-(n+1) in the strip image TM(n+1).

Additionally, a region TL(n) extending from the boundary ML(L)-n to the position of the boundary MR(L)-(n+1) in the photographic image P(n) is cropped as a single strip image (hereinafter also referred to as the strip image TL(n)). Further, a region TR(n) extending from the boundary ML(R)-n to the position of the boundary MR(R)-(n+1) in the photographic image P(n) is cropped as a single strip image (hereinafter referred to as the strip image TR(n)).

Even in this case, the positions of the boundary MR(L)-(n+1) and the boundary MR(R)-(n+1) in the photographic image P(n) are the positions in the photographic image P(n), which overlap these boundaries when the photographic image P(n) and the photographic image P(n+1) are arranged side by side.

In this manner, the region TM(n) substantially at the center in the figure, the region TL(n) in the left side, and the region TR(n) in the right side are cropped from each photographic image P(n), and the strip image TM(n), the strip image TL(n), and the strip image TR(n) are produced.

Then, arranging side by side and combining the strip images TM(n) obtained from the N photographic images result in a single panoramic image. Similarly, arranging side by side and combining the strip images TL(n) obtained from the N photographic images result in a single panoramic image, and arranging side by side and combining the strip images TR(n) obtained from the N photographic images result in a single panoramic image. These panoramic images are images in which the entire range (region) in the image capture area to be captured when the N photographic images are captured is displayed, and have parallaxes.

Referring back to the description of the flowchart of Fig. 5, when strip images are obtained from the photographic images, the strip image generation unit 62 supplies the obtained strip images and the center coordinates of the respective photographic images to the panoramic moving image generation unit 63. After that, the process proceeds from step S16 to step S17.

In step S17, the panoramic moving image generation unit 63 arranges side by side and combines the strip images of the respective frames on the basis of the strip images and the center coordinates of the photographic images obtained from the strip image generation unit 62, and generates image data of one frame of a panoramic moving image.

That is to say, the panoramic moving image generation unit 63 arranges side by side and combines the N strip images TM(n) cropped from a region substantially at the center of the N photographic images P(n), and generates image data of one frame of a panoramic moving image, that is, a single panoramic image.

Similarly, the panoramic moving image generation unit 63 arranges side by side and combines the N strip images TL(n) cropped from the N photographic images P(n), and produces image data of one frame of the panoramic moving image. Further, the panoramic moving image generation unit 63 arranges side by side and combines the N strip images TR(n) cropped from the N photographic images P(n), and produces image data of one frame of the panoramic moving image.

Note that panoramic images generated from a strip image TM(n), a strip image TL(n), and a strip image TR(n) are hereinafter also referred to as a panoramic image PM, a panoramic image PL, and a panoramic image PR, respectively. Furthermore, panoramic moving images formed of the panoramic image PM, the panoramic image PL, and the panoramic image PR are also referred to as a panoramic moving image PMM, a panoramic moving image PML, and a panoramic moving image PMR, respectively.

Further, more specifically, for example, before combining the strip image TM(n) and the strip image TM(n-1), panoramic moving image generation unit 63 determines, for the regions extending from the boundary ML(M)-n to the position of the boundary MR(M)-n in these strip images, pixel values of pixels of the panoramic image using weighted addition.

That is, if the strip image TM(n) and the strip image TM(n-1) are arranged side by side on the basis of the center coordinates, the regions extending from the boundary ML(M)-n to the positions of the boundary MR(M)-n in these strip images overlap each other. The panoramic moving image generation unit 63 performs weighted addition of the pixel values of the overlapping pixels in the strip image TM(n) and the strip image TM(n-1), and sets the resulting values as the pixel values of the pixels in the panoramic image at the positions corresponding to these pixels.

Note that the weights for the weighted addition of the pixels in the regions extending from the boundary ML(M)-n to the positions of the boundary MR(M)-n in the strip image TM(n) and the strip image TM(n-1) are defined so as to have the following features.

That is to say, the pixels at the positions from the boundary ML-n to the boundary MR(M)-n are designed so that the contribution ratio of the pixels in the strip image TM(n) for the generation of the panoramic image becomes higher as the positions of the pixels become closer to the position of the boundary MR(M)-n from the boundary ML-n. Conversely, the pixels at the positions from the boundary ML-n to the boundary ML(M)-n are designed so that the contribution ratio of the pixels in the strip image TM(n-1) for the generation of the panoramic image becomes higher as the positions of the pixels become closer to the position of the boundary ML(M)-n from the boundary ML-n.

Additionally, at the time of the generation of a panoramic image, with regard to the region extending from the boundary MR(M)-n to the boundary ML(M)-(n+1) of the strip image TM(n), the region is set directly as the panoramic image.

Further, at the time of the combination of the strip image TM(n) and the strip image TM(n+1), for the regions extending from the boundary ML(M)-(n+1) to the positions of the boundary MR(M)-(n+1) in these strip images, the pixel values of the pixels of the panoramic image are determined using weighted addition.

That is to say, the pixels at the positions from the boundary ML-(n+1) to the boundary MR(M)-(n+1) are designed so that the contribution ratio of the pixels in the strip image TM(n+1) for the generation of the panoramic image becomes higher as the positions of the pixels become closer to the position of the boundary MR(M)-(n+1) from the boundary ML-(n+1). Conversely, the pixels at the positions from the boundary ML-(n+1) to the boundary ML(M)-(n+1) are designed so that the contribution ratio of the pixels in the strip image TM(n) for the generation of the panoramic image becomes higher as the positions of the pixels become closer to the position of the boundary ML(M)-(n+1) from the boundary ML-(n+1).

Further, also in the combination of the strip image TL(n) and the strip image TR(n), similarly to the case of the strip image TM(n), weighted addition is performed on portions where these strip images overlap other strip images.

In this way, before combination of strip images, regions in the vicinity of the edges of strip images of consecutive frames are subjected to weighted addition to produce the pixel values of pixels of a panoramic image. Thus, a more natural-looking image than in a case where strip images are merely arranged side by side to produce a single image can be obtained.

For example, in a case where a panoramic image is produced by merely arranging strip images side by side, the contour of a subject near the edges of the strip images may be distorted, or difference in brightness of strip images of consecutive frames may cause variation of brightness for each region of the panoramic image.

Thus, the panoramic moving image generation unit 63 combines regions in the vicinity of the edges of the strip images using weighted addition. This can prevent distortion of the contour of the subject or the occurrence of variation in brightness, resulting in the obtainment of a more natural-looking panoramic image.

Additionally, at the time of position alignment of photographic images, the motion estimation unit 61 may detect lens distortion caused by an optical lens included in the image capture unit 22 on the basis of the photographic images. At the time of combination of strip images, the strip image generation unit 62 may correct the strip images using the result of the detected lens distortion. That is to say, distortion caused in a strip image is corrected using image processing on the basis of the result of the detected lens distortion.

When the panoramic image PM, the panoramic image PL, and the panoramic image PR each constituting one frame of one of three panoramic moving images are obtained in the manner as above, the panoramic moving image generation unit 63 supplies these panoramic images to the compression/expansion unit 27 via the bus 25.

In step S18, the compression/expansion unit 27 encodes image data of the panoramic moving images supplied from the panoramic moving image generation unit 63 using, for example, the JPEG (Joint Photographic Experts Group) method, and supplies the resulting image data to the drive 28 via the bus 25.

The drive 28 supplies the image data of the panoramic moving images obtained from the compression/expansion unit 27 to the recording medium 29 to record it. At the time of recording of image data, each piece of image data is assigned a frame number by the panoramic moving image generation unit 63.

In step S19, the signal processing unit 24 determines whether or not a predetermined certain number of frames of image data of the panoramic moving images have been generated. For example, in a case where the generation of a panoramic moving image formed of M frames of image data is defined, it is determined that panoramic moving images of a certain number of frames have been generated when M frames of image data are obtained.

In a case where it is determined in step S19 that panoramic moving images of the certain number of frames have not yet been generated, the process returns to step S16, and image data of the next frame of the panoramic moving image is generated.

For example, in a case where a panoramic image of the first frame of the panoramic moving image PMM is generated, as described with reference to Fig. 8, a strip image is produced by cropping a region TM(n) from a boundary ML(M)-n to the position of a boundary MR(M)-(n+1) in a photographic image P(n).

Then, in a case where panoramic images of the second and subsequent frames of the panoramic moving image PMM are generated, the position of the region TM(n) in the photographic image P(n) from which a strip image is to be cropped is shifted to the left in Fig. 8 by the amount corresponding to a width CW from the boundary ML-n to the boundary ML-(n+1).

That is, it is assumed that a strip image used for the generation of the m-th frame of the panoramic moving image PMM is a strip image TM(n)-m (where 1 ≤ m ≤ M). In this case, the cropping position of the strip image TM(n)-m of the m-th frame is set to a position where the region TM(n) at the cropping position of the strip image TM(n)-1 is shifted to the left in Fig. 8 by a distance (m-1) times the width CW,

Therefore, for example, a region from the strip image TM(n)-2 of the second frame is to be cropped is set to a region that has the same shape and size as the region TM(n) in Fig. 8 in the photographic image P(n) and that has the right edge located at the position of the boundary MR(M)-n.

Here, the direction in which the cropped region of the strip image is to be shifted is determined in advance in accordance with the direction in which the image capture apparatus 11 is turned when a photographic image is captured. For example, the example in Fig. 8 is based on the assumption that the image capture apparatus 11 is turned so that, with respect to the position at the center of a photographic image of a certain frame, the position at the center of a photographic image of the next frame is always positioned on the right side in the figure. That is, the example in Fig. 8 is based on the assumption that the movement direction of the image capture apparatus 11 is the rightward direction in the figure.

The reason is as follows. If the cropping positions of strip images are shifted every frame in the direction opposite to the movement direction of the position at the center of the photographic images in accordance with the movement of the image capture apparatus 11, the same subject that is not moving would be displayed at the same position in individual panoramic images constituting a panoramic moving image.

Similarly to the case of the panoramic moving image PMM, also in a case where the panoramic moving image PML and the panoramic moving image PMR are generated, the positions of the region TL(n) and the region TR(n) in the photographic image P(n) from which strip images are to be cropped are shifted to the left in Fig. 8 by the amount corresponding to the width from the boundary LL-n to the boundary LL-(n+1) and by the amount corresponding to the width from the boundary RL-n to the boundary RL-(n+1).

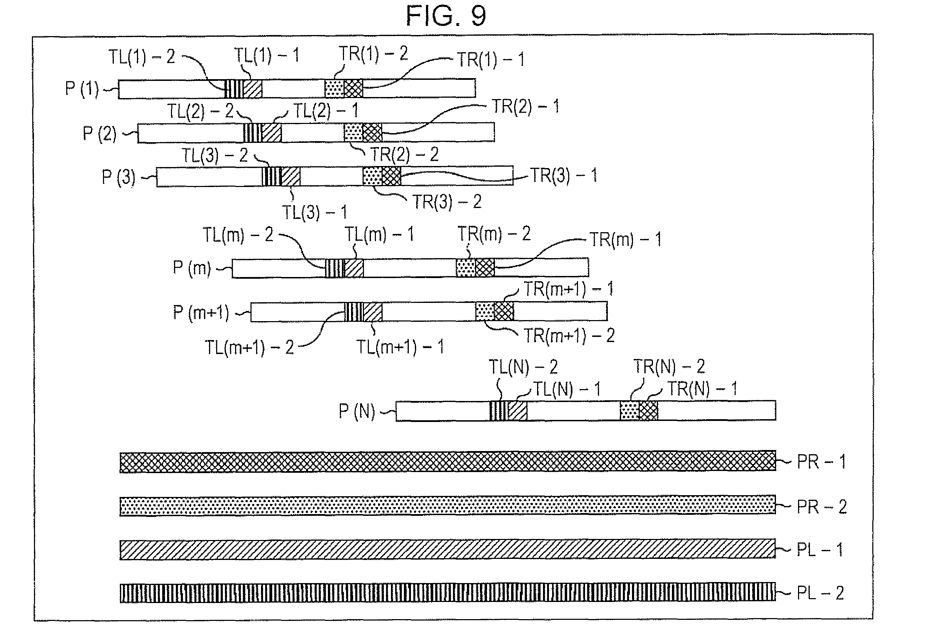

Generating image data of each frame of a panoramic moving image while shifting the cropping position of a strip image every frame in the above way results in the obtainment of, for example, a panoramic moving image as illustrated in Fig. 9. Note that in Fig. 9, the horizontal direction in the figure corresponds to the horizontal direction in Fig. 8. For example, the horizontal direction in Fig. 9 corresponds to the x direction in the xy coordinate system.

In the example in Fig. 9, strip images TR(1)-1 to TR(N)-1 are generated from N photographic images P(1) to P(N), respectively, and these strip images are combined to obtain a panoramic image PR-1.

Similarly, strip images TR(1)-2 to TR(N)-2 are generated from the N photographic images P(1) to P(N), respectively, and these strip images are combined to obtain a panoramic image PR-2. The panoramic image PR-1 and the panoramic image PR-2 are images constituting the first frame and the second frame of the panoramic moving image PMR, respectively.

Additionally, strip images TL(1)-1 to TL(N)-1 are generated from the N photographic images P(1) to P(N), respectively, and these strip images are combined to obtain a panoramic image PL-1.

Similarly, strip images TL(1)-2 to TL(N)-2 are generated from the N photographic images P(1) to P(N), respectively, and these strip images are combined to obtain a panoramic image PL-2. The panoramic image PL-1 and the panoramic image PL-2 are images constituting the first frame and the second frame of the panoramic moving image PML, respectively.

Additionally, although not illustrated in the figure, strip images TM(n) are cropped from the photographic images P(1) to P(N), and a panoramic image constituting each frame of the panoramic moving image PMM is also generated.

Here, for example, a cropped region of the strip image TR(2)-2 from the photographic image P(2) is the region at the position where the cropped region of the strip image TR(2)-1 is shifted to the left in the figure by the amount corresponding to the width CW. The value of the width CW changes for each frame of a photographic image.

Further, for example, the same subject at different times is displayed in the strip image TR(1)-1 and the strip image TR(2)-2. Furthermore, the same subject at different times is also displayed in the strip image TR(1)-1 and the strip image TL(m)-1.

In this way, the same subject at different times is displayed in the panoramic images PR-1 to PL-2. That is, the respective panoramic images have parallaxes. Further, since a panoramic image is generated by combining different strip images obtained from photographic images of a plurality of frames, the times at which a subject displayed in respective regions even in a single panoramic image was captured are different.

Note that more specifically, edge portions of each panoramic image are generated using the photographic image P(1) and the photographic image P(N). For example, the left edge portion of the panoramic image PR-1 in the figure is the image from the left edge of the photographic image P(1) to the right edge portion of the strip image TR(1)-1.

Referring back to the description of the flowchart of Fig. 5, in a case where it is determined in step S19 that panoramic moving images of the certain number of frames have been generated, the signal processing unit 24 receives the specified magnitude of parallax of a stereoscopic panoramic moving image to be displayed from now on. Then, the process proceeds to step S20.

In the image capture apparatus 11, the three panoramic moving images PMM, PML, and PMR are generated using the process described as above, and are recorded on the recording medium 29.

The panoramic moving image PMM is a moving image generated by cropping the region TM(n) substantially at the center in Fig. 8 in the photographic image. Furthermore, the panoramic moving image PML and the panoramic moving image PMR are moving images generated by cropping the region TL(n) on the left side and the region TR(n) on the right side of the center in Fig. 8 in the photographic image.

Here, since the region TM(n) is positioned slightly to the left in the figure with respect to the center of the photographic image P(n), the distance from the region TM(n) to the region TL(n) is shorter than the distance from the region TM(n) to the region TR(n). Therefore, the magnitude of the parallax between the panoramic image PM and the panoramic image PL, the magnitude of the parallax between the panoramic image PM and the panoramic image PR, and the magnitude of the parallax between the panoramic image PL and the panoramic image PR are different from one another.

Now, it is assumed that a stereoscopic panoramic moving image formed of the panoramic moving image PMM and the panoramic moving image PML is referred to as a stereoscopic panoramic moving image ML and a stereoscopic panoramic moving image formed of the panoramic moving image PMM and the panoramic moving image PMR is referred to as a stereoscopic panoramic moving image MR. Furthermore, it is assumed that a stereoscopic panoramic moving image formed of the panoramic moving image PML and the panoramic moving image PMR is referred to as a stereoscopic panoramic moving image LR.

At this time, in the stereoscopic panoramic moving image ML, the panoramic moving image PML and the panoramic moving image PMM serve as right-eye and left-eye panoramic moving images, respectively. Similarly, in the stereoscopic panoramic moving image MR, the panoramic moving image PMM and the panoramic moving image PMR serve as right-eye and left-eye panoramic moving images, respectively. Furthermore, in the stereoscopic panoramic moving image LR, the panoramic moving image PML and the panoramic moving image PMR serve as right-eye and left-eye panoramic moving images, respectively.

In these three stereoscopic panoramic moving images, the stereoscopic panoramic moving image LR has the largest parallax (distance between points of view), the stereoscopic panoramic moving image MR has the second largest parallax, and the stereoscopic panoramic moving image ML has the smallest parallax. Therefore, it is possible to display a stereoscopic panoramic moving image having different parallaxes depending on which of these three stereoscopic panoramic moving images is to be displayed on the display unit 31.

Thus, the image capture apparatus 11 causes the user to specify one of "large parallax", "medium parallax", and "small parallax" as the magnitude of parallax, and displays a stereoscopic panoramic moving image having the parallax according to the specification of the user. That is to say, in response to the specification of "large parallax", "medium parallax", and "small parallax", the stereoscopic panoramic moving image LR, the stereoscopic panoramic moving image MR, and the stereoscopic panoramic moving image ML are reproduced, respectively.

In step S20, the selection unit 64 selects two panoramic moving images from among the three panoramic moving images recorded on the recording medium 29 on the basis of a signal from the operation input unit 21. For example, in a case where the user specifies "large parallax, the selection unit 64 selects the panoramic moving image PML and the panoramic moving image PMR between which the parallax for the stereoscopic panoramic moving image is the largest.

If two panoramic moving images, that is, a stereoscopic panoramic moving image having the specified parallax, are selected, the selection unit 64 reads the selected two panoramic moving images from the recording medium 29 via the drive 28. Then, the selection unit 64 supplies image data of the read panoramic moving images to the compression/expansion unit 27 to instruct it to decode the image data. Then, the process proceeds to step S21.

In step S21, the compression/expansion unit 27 decodes the image data of the two panoramic moving images supplied from the selection unit 64, that is, panoramic images, using, for example, the JPEG method, and supplies the resulting image data to the signal processing unit 24.

In step S22, the signal processing unit 24 reduces the size of the panoramic image of each of frames constituting the panoramic moving images to a predetermined size. For example, a size reduction process is performed so as to obtain a size that allows an entire panoramic image to be displayed on the display screen of the display unit 31.

When the sizes of the panoramic moving images are reduced, the signal processing unit 24 supplies a stereoscopic panoramic moving image formed of the size-reduced two panoramic moving images to the display control unit 30. For example, in a case where the stereoscopic panoramic moving image LR is displayed, the panoramic moving image PML is used as the right-eye one and the panoramic moving image PMR is used as the left-eye one.

In step S23, the display control unit 30 supplies the stereoscopic panoramic moving image obtained from the signal processing unit 24 to the display unit 31 to cause the stereoscopic panoramic moving image to be displayed. That is, the display control unit 30 supplies the respective frames of the right-eye and left-eye panoramic moving images to the display unit 31 in order at certain time intervals to display them stereoscopically using the lenticular method.

Specifically, the display unit 31 divides the right-eye and left-eye panoramic images of each frame into several strip-like images, and the right-eye images and left-eye images obtained by division are alternately arranged side by side in a certain direction and displayed, thereby displaying a stereoscopic panoramic moving image. The light rays of the right-eye panoramic image and left-eye panoramic image obtained by division and displayed in the above manner are directed to the right eye and the left eye of the user who views the display unit 31, using the lenticular lens included in the display unit 31. Thereby, a stereoscopic panoramic moving image is observed by the eyes of the user.

When a stereoscopic panoramic moving image is displayed (reproduced) on the display unit 31, the stereoscopic panoramic moving image reproduction process ends.

In this way, the image capture apparatus 11 generates a plurality of strip images, while shifting a cropped region, from each of a plurality of photographic images captured at different times, and combines the strip images to generate a panoramic moving image of each frame.

Additionally, the image capture apparatus 11 generates a plurality of panoramic moving images, selects two of the plurality of panoramic moving images in accordance with the magnitude of the parallax specified by the user, and causes a stereoscopic panoramic moving image formed of the selected two panoramic moving images to be displayed.

The stereoscopic panoramic moving image generated in this way enables, in addition to giving movement to a captured subject and expressing the movement, stereoscopic display of the subject. Thus, a captured image of the subject can be more effectively displayed.

In addition, a subject in respective regions in a single panoramic image has been captured at different times. Thus, a more interesting image can be presented. That is, the capture image of the subject can be more effectively displayed.

Furthermore, since a plurality of panoramic moving images are generated and recorded in advance, a stereoscopic panoramic moving image having different parallaxes can be presented in accordance with a request of the user. That is to say, the user can specify a desired magnitude of parallax and can enjoy a stereoscopic panoramic moving image having the specified parallax.

The image capture apparatus 11 has been described in the context of an example in which three panoramic moving images are generated and any of stereoscopic panoramic moving images having three different parallaxes is displayed in accordance with the parallax specified by the user. However, stereoscopic panoramic moving images having four or more different parallaxes may be displayed. In such a case, panoramic moving images having parallaxes, the number of which corresponds to the number of displayable stereoscopic panoramic moving images, are generated, and are recorded on the recording medium 29.

Additionally, instead of recording three panoramic moving images on the recording medium 29, three stereoscopic panoramic moving images LR, MR, and ML may be generated in advance and recorded on the recording medium 29. In such a case, a stereoscopic panoramic moving image having the parallax specified by the user is read from the recording medium 29, and is displayed.

Note that in the foregoing description, N photographic images are captured, and all the photographic images are temporarily recorded on the buffer memory 26, after which a panoramic moving image is generated using these photographic images. However, the generation of a panoramic moving image may be performed simultaneously with the capture of photographic images.

Furthermore, in the above description, after panoramic moving images are generated, the size of the panoramic moving images is reduced. However, size-reduced panoramic moving images may be generated directly from photographic images. In this case, the amount of processing required until a stereoscopic panoramic moving image is reproduced can be made smaller, resulting in more rapid display of the stereoscopic panoramic moving image. Further, an apparatus such as a personal computer may be provided with a function for generating a panoramic moving image from photographic images, and may be designed to generate a panoramic moving image from photographic images captured using a camera.

Further, the foregoing description has been given in the context of an example in which a region of an entire range in the image capture area to be captured when photographic images are captured is displayed as a subject in a panoramic image. However, only a sub-region of the region of the entire range in the image capture area may be displayed on a panoramic image. In such a case, only the sub-region to be captured in the image capture area is displayed as a stereoscopic panoramic moving image.

Further, also, instead of displaying a stereoscopic panoramic moving image, a stereoscopic panoramic image formed of right-eye and left-eye panoramic images having a specified parallax may be displayed. In such a case, two panoramic images defined by the specified parallax are selected from among, for example, the panoramic image PM, the panoramic image PL, and the panoramic image PR, and a stereoscopic panoramic image formed of the selected panoramic images is displayed.

The series of processes described above can be executed by hardware, or can be executed by software. In a case where the series of processes is executed by software, a program constituting the software is installed from a program recording medium into a computer incorporated in dedicated hardware or, for example, a general-purpose personal computer or the like capable of executing various functions by installing various programs therein.

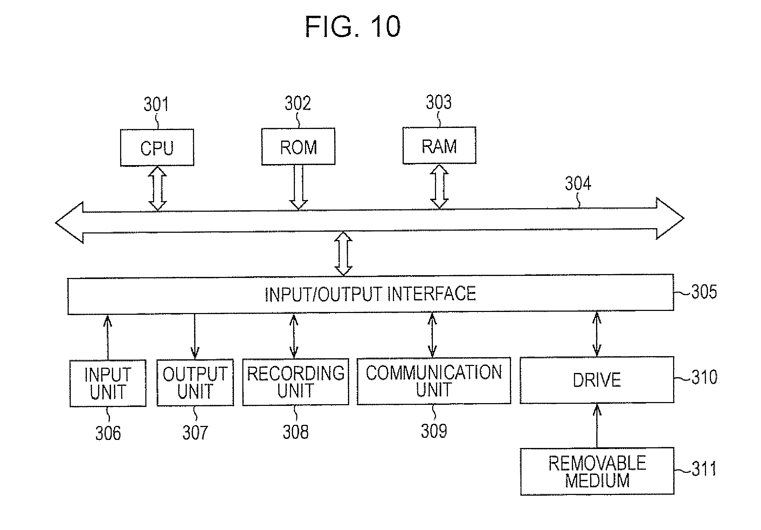

Fig. 10 is a block diagram illustrating an example configuration of hardware of a computer that executes the series of processes described above using a program.

In the computer, a CPU (Central Processing Unit) 301, a ROM (Read Only Memory) 302, and a RAM (Random Access Memory) 303 are connected to one another via a bus 304.

Further, an input/output interface 305 is connected to the bus 304. An input unit 306 formed of a keyboard, a mouse, a microphone, and the like, an output unit 307 formed of a display, speakers, and the like, a recording unit 308 formed of a hard disk, a non-volatile memory, and the like, a communication unit 309 formed of a network interface and the like, and a drive 310 that drives a removable medium 311 such as a magnetic disk, an optical disk, a magneto-optical disk, or a semiconductor memory are connected to the input/output interface 305.

In the computer configured as above, the CPU 301 loads the program recorded on, for example, the recording unit 308 into the RAM 303 via the input/output interface 305 and the bus 304 and executes the program. Thereby, the series of processes described above is performed.

The program executed by the computer (CPU 301) is recorded on the removable medium 311 that is a packaged medium formed of, for example, a magnetic disk (including a flexible disk), an optical disk (such as a CD-ROM (Compact Disc-Read Only Memory) or a DVD (Digital Versatile Disc)), a magneto-optical disk, a semiconductor memory, or the like, or is provided via a wired or wireless transmission medium such as a local area network, the Internet, or digital satellite broadcasting.

Then, the program can be installed into the recording unit 308 via the input/output interface 305 by attaching the removable medium 311 to the drive 310. Furthermore, the program can be received by the communication unit 309 via a wired or wireless transmission medium, and can be installed into the recording unit 308. Alternatively, the program can be installed into the ROM 302 or the recording unit 308 in advance.

Note that the program executed by the computer may be a program in which processes are performed in a chronological manner in accordance with the order described herein, or may be a program in which processes are performed in parallel or at a necessary timing such as when called.

Note that embodiments of the present invention are not to be limited to the embodiment described above, and a variety of modifications can be made without departing from the scope of the present invention.

### Reference Signs List

11 image capture apparatus, 22 image capture unit, 24 signal processing unit, 61 motion estimation unit, 62 strip image generation unit, 63 panoramic moving image generation unit, 64 selection unit

## Claims

1. An image processing apparatus comprising:
position information generating means for generating position information on the basis of a plurality of photographic images obtained by capturing images using image capturing means while moving the image capturing means, the position information indicating a relative positional relationship between the plurality of photographic images when the photographic images are arranged side by side in a certain plane so that a same subject included in the photographic images that are different appears in an overlapping manner;
strip image generating means for generating a first strip image to a third strip image from each of the plurality of photographic images in a case where the plurality of photographic images are arranged side by side in the plane on the basis of the position information, by cropping, from a first reference position to a third reference position in a photographic image among the photographic images, a first region to a third region in the photographic image which correspond to the first reference position to the third reference position in another photographic image arranged side by side so as to overlap the photographic image;
panoramic image generating means for generating a first panoramic image to a third panoramic image having parallaxes in which a same region in an image capture area to be captured when the plurality of photographic images are captured is displayed, by arranging side by side and combining the first strip image to the third strip image obtained from the plurality of photographic images; and
selecting means for selecting two panoramic images from among the first panoramic image to the third panoramic image,
wherein the first reference position is located between the second reference position and the third reference position in the photographic image, and a distance from the first reference position to the second reference position is different from a distance from the first reference position to the third reference position.

2. The image processing apparatus according to Claim 1, further comprising display control means for causing the same region in the image capture area to be displayed stereoscopically by causing the two panoramic images selected by the selecting means from among the first panoramic image to the third panoramic image to be displayed simultaneously.

3. The image processing apparatus according to Claim 1,
wherein the strip image generating means generates a plurality of the first strip images to a plurality of the third strip image for the plurality of photographic images, from the photographic images while shifting the first regions to the third regions in the photographic images in a certain direction, and
wherein the panoramic image generating means generates the first panoramic image to the third panoramic image for positions of each of the first regions to each of the third regions to generate an image group having a plurality of the first panoramic images to a plurality of the third panoramic images in which the same region in the image capture area is displayed.

4. The image processing apparatus according to Claim 1,
wherein the position information generating means generates the position information using a plurality of predetermined block regions in a photographic image among the photographic images, by searching for each of block corresponding regions corresponding to the plurality of block regions from a photographic image captured at a time earlier than the photographic image.

5. The image processing apparatus according to Claim 4,
wherein the position information generating means generates the position information on the basis of a relative positional relationship between the plurality of block regions and a relative positional relationship between a plurality of the block corresponding regions, by detecting a block region including a moving subject and by, in a case where a block region including the moving subject is detected, searching for the corresponding block corresponding region from among the plurality of block regions using a block region different from the detected block region.

6. An image processing method for an image processing apparatus including
position information generating means for generating position information on the basis of a plurality of photographic images obtained by capturing images using image capturing means while moving the image capturing means, the position information indicating a relative positional relationship between the plurality of photographic images when the photographic images are arranged side by side in a certain plane so that a same subject included in the photographic images that are different appears in an overlapping manner,
strip image generating means for generating a first strip image to a third strip image from each of the plurality of photographic images in a case where the plurality of photographic images are arranged side by side in the plane on the basis of the position information, by cropping, from a first reference position to a third reference position in a photographic image among the photographic images, a first region to a third region in the photographic image which correspond to the first reference position to the third reference position in another photographic image arranged side by side so as to overlap the photographic image,
panoramic image generating means for generating a first panoramic image to a third panoramic image having parallaxes in which a same region in an image capture area to be captured when the plurality of photographic images are captured is displayed, by arranging side by side and combining the first strip image to the third strip image obtained from the plurality of photographic images, and
selecting means for selecting two panoramic images from among the first panoramic image to the third panoramic image,
the image processing method comprising the steps of:
generating, by the position information generating means, the position information from the plurality of photographic images;
generating, by the strip image generating means, the first strip image to the third strip image from the plurality of photographic images;
generating, by the panoramic image generating means, the first panoramic image to the third panoramic image from the first strip image to the third strip image; and
selecting, by the selecting means, two panoramic images from among the first panoramic image to the third panoramic image,
wherein the first reference position is located between the second reference position and the third reference position in the photographic image, and a distance from the first reference position to the second reference position is different from a distance from the first reference position to the third reference position.

7. A program for causing a computer to execute a process comprising the steps of:
generating position information on the basis of a plurality of photographic images obtained by capturing images using image capturing means while moving the image capturing means, the position information indicating a relative positional relationship between the plurality of photographic images when the photographic images are arranged side by side in a certain plane so that a same subject included in the photographic images that are different appears in an overlapping manner;
generating a first strip image to a third strip image from each of the plurality of photographic images in a case where the plurality of photographic images are arranged side by side in the plane on the basis of the position information, by cropping, from a first reference position to a third reference position in a photographic image among the photographic images, a first region to a third region in the photographic image which correspond to the first reference position to the third reference position in another photographic image arranged side by side so as to overlap the photographic image;
generating a first panoramic image to a third panoramic image having parallaxes in which a same region in an image capture area to be captured when the plurality of photographic images are captured is displayed, by arranging side by side and combining the first strip image to the third strip image obtained from the plurality of photographic images; and
selecting two panoramic images from among the first panoramic image to the third panoramic image,
wherein the first reference position is located between the second reference position and the third reference position in the photographic image, and a distance from the first reference position to the second reference position is different from a distance from the first reference position to the third reference position.
